**Europäisches Patentamt**

(19) **European Patent Office**

**Office européen des brevets**

(11) Veröffentlichungsnummer : **0 082 437**
**B1**

# EUROPÄISCHE PATENTSCHRIFT

(45) Veröffentlichungstag der Patentschrift :
07.05.86

(51) Int. Cl.⁴ : **A 01 N 25/04**

(21) Anmeldenummer : **82111457.6**

(22) Anmeldetag : **10.12.82**

(54) **Neue Pflanzenschutzmittelsuspensionskonzentrate.**

(30) Priorität : **23.12.81 DE 3150990**

(43) Veröffentlichungstag der Anmeldung :
**29.06.83 Patentblatt 83/26**

(45) Bekanntmachung des Hinweises auf die Patenterteilung : **07.05.86 Patentblatt 86/19**

(84) Benannte Vertragsstaaten :
**AT BE CH DE FR GB IT LI LU NL SE**

(56) Entgegenhaltungen :
**WO-A-79 /006 54**
**DE-A- 3 010 041**
**CHEMICAL ABSTRACTS, Band 86, Nr. 5, 31. Januar 1977, Seite 119, Nr. 26922c, Columbus, Ohio, USA**

(73) Patentinhaber : **A. Nattermann & Cie. GmbH**
**Nattermannallee 1**
**D-5000 Köln 30 (DE)**

(72) Erfinder : **Bauer, Kurt Heinz, Prof.Dr.**
**Im Finkeler 4**
**D-7800 Freiburg 33 (DE)**
Erfinder : **Ghyczy, Miklos, Dr.**
**Am Serviesberg 12**
**D-5000 Köln 41 (DE)**
Erfinder : **Etschenberg, Eugen, Dr.**
**Hirseweg 10**
**D-5000 Köln 41 (DE)**
Erfinder : **Osthoff, Heinrich, Dr.**
**Ronsdorfer Strasse 51**
**D-5030 Hürth (DE)**

(74) Vertreter : **Redies, Bernd, Dr. rer. nat.**
**COHAUSZ & FLORACK Patentanwaltsbüro Schumannstrasse 97 Postfach 14 01 47**
**D-4000 Düsseldorf 1 (DE)**

**Beschreibung**

Die vorliegende Erfindung hetrifft neue Suspensionskonzentrate, die nebem einem unlöslichen oder schwerlöslichen Pestizid ein Phospholipid und ein physiologisch unbedenkliches Lösungsmittel oder Lösungsmittelgemisch aus der Gruppe der Alkohole oder Ether enthalten, sowie deren Herstellung.

Auf den Einsatz von Pflanzenschutzmittel zur Reduzierung von Ernteverlusten durch Krankheiten, Schädlinge und Unkräuter kann heute in der Landwirtschaft nicht mehr verzichtet werden. Die meisten Pflanzenschutzmittel sind wasserunlöslich bzw. in Wasser sehr schwer löslich und müssen daher als benetzbares Pulver oder Emulsionskonzentrat in sehr verdünnter Konzentration angewandet werden.

In der Landwirtschaft werden wegen der günstigeren Dosierung Emulsionskonzentrate den Pulver- oder Granulatformen bevorzugt. Die Emulsionskonzentrate werden bei der Anwendung in Wasser emulgiert und als sogenannte Spritzbrühen ausgetragen.

Spritzbrühen werden im allgemeinen aus wasserfreien oder wasserarmen Emulsionskonzentraten von wasserunlöslichen Wirkstoffen hergestellt. Die Emulsionskonzentrate enthalten etwa 10-40 % der Wirkstoffe und außerdem organische Lösungsmittel und Emulgatoren sowie sonstige Hilfsmittel, wie Stabilisatoren, weitere Netzmittel und Antischaummittel.

Zur Herstellung der Emulsionskonzentrate dieser wasserunlöslichen Wirkstoffe werden diese in einem geeigneten organischen Lösungsmittel, wie Alkylbenzole, Aceton, Kerosin und Toluol gelöst und mit einem geeigneten Emulgator oder meist Mischungen solcher Emulgatoren versetzt. Als Emulgatoren werden vorzugsweise anionische, kationische oder nichtionische Emulgatoren bzw. Mischungen dieser Emulgatoren verwandt. Viele Netzmittel und Emulgatoren können die Osmose und den Wasserhaushalt der Pflanzen stark stören, so daß die behandelten Pflanzen geschädigt werden. Darüberhinaus sind die zur Anwendung gelangten Lösungsmittel meist selbst toxisch und können zur Belastung für die Umwelt werden.

Beim Ansetzten einer Spritzbrühe sollen die entsprechenden Konzentrate spontan emulgieren. Die entstehende Emulsion soll so stabil sein, daß sie auch bei mehrstündigem Stehen keine irreversiblen Entmischungserscheinungen zeigen. Beim Rühren und Umpumpen soll kein beständiger Schaum entstehen. Die Forderungen an eine ideale Spritzbrühe sind z. B. die Entstehung eines kontinuierlichen Wirkstoffilms mit guter Haftung oder Benetzung auf der zu schützenden Pflanze sowie eine hohe Widerstandsfähigkeit gegen Abwaschen durch Regen oder sonstige Witterungseinflüsse. Ferner soll ein beschleunigtes Eindringen des Wirkstoffes in die Pflanze gewährleistet sein.

Die meisten Pestizide sind jedoch nicht nur in Wasser schwer- bzw. unlöslich, sondern auch in den für die in der Landwirtschaft akzeptablen Lösungsmitteln nicht löslich. Solche Mittel können nur als Granulat oder benetzbares Pulver angewendet werden. Bei der Anwerdung in der Praxis kommt es zu Schwierigkeiten bei der exakten Dosierung und Ausbringung. Es ist deshalb wünschenswert, auch für diese Wirkstoffe eine flüssige Form zu haben.

Es wurde nun überraschenderweise gefunden, daß man stabile Suspensionskonzentrate von Pflanzenschutzmitteln erhält, wenn mann ein Gemisch aus

a) 15-35 % eines in Wasser oder physiologisch unbedenklichen Lösungsmitteln eines Löslichkeit von ≤ 2 % aufweisenden Pestizides mit einem Schmelzpunkt von > 40 °C,

b) 15-35 % eines Phospholipides aus der Gruppe Phosphatidylcholin, den hydrierten Phosphatidylcholinen, Phosphatidylethanolamin, den N-Acyl-phosphatidylethanolaminen, Phosphatidylinosit, Phosphatidylserin und Phosphatidylglycerol oder eines Gemisches aus mehreren solcher Phospholipide und

c) 40-60 % eines Lösungsmittels oder Lösungsmittelgemisches aus der Gruppe der Alkohole bzw. Ether zusammen in einer Kolloid-, Kugel-, Sand-, Rührwerks- oder Reibkugelmühle 10-60 Min. bei 20-50 °C bis zu einer Partikelgröße von ≤ 1 μ vermahlt.

Vorzugsweise wird als Phospholipid Phosphatidylcholin oder Mischungen aus Phosphatidylcholin und Phosphatidylethanolaminen eingesetzt. Ganz besonders bevorzugt wird als Phospholipid ein Phospholipid mit einem Gehalt von 20-98 % Phosphatidylcholin eingesetzt.

Die neuen Suspensionskonzentrate zeichnen sich dadurch aus, daß der Wirkstoff in sehr fein gemahlener, mittlerer Teilchengröß ≤ 1 μ durch den Zusatz der Phospholipide fein verteilt vorliegt. Die neuen Suspensionskonzentrate zeigen eine hohe Lagerstabilität.

Beim Ansetzen von Spritzbrühen mit Wasser aus diesen Konzentraten zeigen die neuen Zusammensetzungen spontanes Suspendieren. Die entstehenden Suspensionen sind sehr stabil und zeigen auch bei längerer Lagerung keine irreversiblen Entmischungserscheinungen. Die Spritzbrühen ergeben bei der Applikation einen kontinuierlichen Wirkstoffilm mit guter Haftung und Benetzung auf den zu schützenden Pflanzenteilen. Darüberhinaus ist ein beschleunigtes Eindringen in die Pflanze gewährleistet. Auch zeigen sie eine hohe Widerstandsfähigkeit gegen Abwaschen durch Regen oder andere Witterungseinflüsse. Weiterhin sind die Phospholipide als ubiquitäre Bausteine lebender Materie völlig ungiftig und stellen keine Belastung des ökologischen Gleichgewichts dar.

Als Phospholipide kommen z. B. die im Handel erhältlichen Phosphatidylcholine oder Phosphatidylcholin-Mischprodukte, wie z. B.

2

Phospholipon<sup>R</sup> 25 nbsp; (25 % Phosphatdidylcholin
25 % Phosphatidylethanolamin
20 % Phosphatidylinosit)
Phospholipon<sup>R</sup> 38 nbsp; (38 % Phosphatidylcholin
16 % N-Acetyl-phosphatidylethanolamin
4 % Phosphatidylethanolamin)
Phospholipon<sup>R</sup> 55 nbsp; (55 % Phosphatidylcholin
25 % Phosphatidylethanolamin
2 % Phosphatidylinosit)
Phospholipon<sup>R</sup> 80 nbsp; (80 % Phosphatidylcholin
10 % Phosphatidylethanolamin)
Phospholipon<sup>R</sup> 100 nbsp; (96 % Phosphatidylcholin)
Phospholipon<sup>R</sup> 100H nbsp; (96 % hydriertes Phosphatidylcholin) in Frage.

Besonders bevorzugt sind natürliche Phosphatidylcholine, die nach den in den folgenden Patentschriften beschriebenen Verfahren erhalten werden können : DE-PS 10 47 579, DE-PS 10 53 299, DE-PS 16 17 679, DE-PS 16 17 680, deutsche Offenlegungsschriften 30 47 048, 30 47 012 oder 30 47 011.

Als N-Acyl-phosphatidylethanolamine kommen insbesondere diejenigen in Betracht, in denen die Acylgruppe sich von gesättigten oder olefinisch ungesättigten Fettsäuren mit 2-20 Kohlenstoffatomen, insbesondere die gesättigten mit 2-5 Kohlenstoffatomen oder die gesättigten oder einmal olefinisch ungesättigten mit 14, 16, 18 oder 20 Kohlenstoffatomen herleiten. Als physiologisch unbedenkliche organische Lösungsmittel bzw. Lösungsmittelgemische kommen Alkohole bzw. Ether, wie z. B. Methanol, Ethanol, Propanol, Isopropanol, Butanol, Isobutanol, tert.-Butanol, sec.-Butanol, Ethylenglykol, Ethylenglykolmonomethylether, Ethylenglykolmonoethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykole, Propylenglykole, Propylenglykolmonomethylether, Propylenglykolmonoethylether, Propylenglykoldimethylether, Propylenglykoldiethylether, Butylenglykol, Glycerin, Solketal, Tetrahydrofuran oder Dioxan in Frage. Bevorzugt sind Mischungen aus $C_{1-3}$-Alkoholen, wie Methanol, Ethanol, Propanol oder Isopropanol und Ethylenglykolmono- oder dialkylether.

Als unlösliche bzw. schwerlösliche Pestizide kommen Wirkstoffe oder Wirkstoffgemische aus den Gruppen der Herbizide, Fungizide, Insektizide, Akarizide, Nematizide oder Pflanzenwachstumsregulatoren in Frage, die wegen ihrer Unlöslichkeit bzw. geringer Löslichkeit in Wasser und in physiologisch unbedenklichen Lösungsmitteln, insbesondere in Alkoholen, bisher nicht in flüssiger Form, z. B. als Lösung oder Emulsionskonzentrat, eingesetzt werden konnten.

Als unlösliche bzw. schwerlösliche Pestizide kommen z. B. folgende Wirkstoffe in Frage :
Aus der Gruppe der Herbizide z. B. :

N-Phosphonomethylglycin (Glyphosat),
3-(3-Chlor-4-methyl-phenyl)-1,1-dimethylharnstoff (Chlortoluron),
N-(4-Methoxy-6-methyl-1,3,5-triazin-2-yl)-aminocarbonyl-2-chlorphenylsulfonamid,
3-(4-Isopropyl-phenyl)-1,1-dimethylharnstoff (Isoproturon),
3-Methyl-4-amino-6-phenyl-1,2,4-triazin-5(4H)-on (Metamitron),
1,3-Dimethyl-3-(2-benzthiazolyl)-harnstoff (Methabenzthiazuron),
2-Chlor-4-ethylamino-6-isopropylamino-s-triazin (Atrazin),
3-(3,4-Dichlorphenyl)-1-methoxy-1-methylharnstoff (Linuron),
3,5-Dibrom-4-hydroxybenzaldehyd-O-(2,4-dinitrophenyl)-oxim (Bromfenoxim),
3-[4-(Chlorphenoxy)-phenyl]-1,1-dimethylharnstoff (Chloroxuron),
2,6-Dichlor-thio-benzamid (Chlorthiamid),
N,N-Dimethyl-2,2-diphenylacetamid (Diphenamid),
3-(3,4-Dichlorphenyl)-1,1-dimethylharnstoff (Diuron),
2-(3,4-Dichlorphenyl)-4-methyl-1,2,4-oxadiazolidin-3,5-dion (Methazol),
3-(p-Chlorphenyl)-1,1-dimethylharnstoff (Monuron),
3-(3,4-Dichlorphenyl)-1-methyl-1-n-butylharnstoff (Neburon),
2-Chlor-4,6-bis-ethylamino-s-triazin (Simazin), oder
3-tert.-Butyl-5-Chlor-6-methyluracil (Terbacil) ;

aus der Gruppe der Fungizide z. B. :

1,3-Dicyan-2,4,5,6-tetrachlorbenzol (Chlorthalonil),
N-Trichlormethylthiophthalimid (Folpet),
N-(Trichlormethylthio)-tetrahydrophthalimid (Captan),
1-(Butylcarbamoyl)-benzimidazol-2-yl-carbamat (Benomyl),
2,4-Dichlor-6-(2-chloranilin)-1,3,5-triazin (Anilazin),
2-(Methoxy-carbonylamino)-benzimidazol (Carbendazim),

6-Methyl-2-oxo-1,3-dithiol [4,5-b]-chinoxalin (Chinomethionat),
Triphenylzinnacetat (Fentin-acetat),
Eisendimethyldithiocarbamat (Ferbam),
N-Trichlormethylthiophthalimid (Folpet),
Kupferoxychlorid,
Mangan-Zink-ethylendiamin-bis-dithio-carbamat (Manozeb),
Mangan-(II)-[N,N′-ethylen-bis(dithiocarbamat)] (Maneb), oder
Tetramethyl-thiuram-disulfid (Thiram) ;

oder z. B. folgende Insektizide :

2,3-Dihydro-2,2-dimethyl-benzofuran-7-yl-N-methylcarbamat (Carbofuran),
O,S-Dimethyl-N-acetyl-aminothiophosphat (Acephat),
1-(4-Chlorphenyl)-3-(2,6-difluorbenzoyl)-harnstoff (Diflubenzuron),
6-Chlor-3,4-xylyl-N-methylcarbamat (Carbanolat), oder
Endrin.

Grundsätzlich kommen alle Pestizide in Frage, deren Löslichbeit in Wasser oder physiologisch unbedenklichen Lösungsmitteln, insbesondere in den oben aufgeführten Alkoholen bzw. Ethern eine Löslichkeit von ≤ 2 % aufweisen.

Beispiel 1

Herstellung eines Herbizid-Suspensionskonzentrates.

200 kg 3-Methyl-4-amino-6-phenyl-1,2,4-triazin-5(4H)-on (Metamitron)
200 kg Phospholipid (50 % Phosphatidylcholin)
240 kg Propanol
180 kg Polyethylenglykol 300

werden in einem 1 000 Liter Lösemischer 1/2 Stunde dispergiert. Anschließend wird eine 25 Liter Perlmühle (Rührwerkskugelmühle) der Fa. Drais, Mannheim, zugeschaltet und die Durchflußgeschwindigkeit durch die Mühle an 100 Liter/Stunde eingestellt. Durch diesen Mahlvorgang werden die Metamitronkristalle auf eine mittlere Teilchengröße von < 1 µm vermahlen. Das resultierende Suspensionskonzentrat ist eine gut gießbare Flüssigkeit, die in Wasser spontan oder nach leichtem Schütteln eine stabile Suspension liefert. Die Suspension ist als Spritzbrühe verwendbar.

Beispiel 2

Herstellung eines Fungizid-Suspensionskonzentrates.

120 g 1-(Butylcarbamoyl)-benzimidazol-2-yl-carbamat (Benomyl)
115 g Phospholipid (78 % Phosphatidylcholin)
228 g Butanol
107 g Ethylenglykoldiethylether

werden analog Beispiel 1 10 Minuten vermahlen. Das resultierende flüssige Produkt gibt mit Wasser verdünnt die gewünschte Spritzbrühe.

Beispiel 3

Herstellung eines Herbizid-Suspensionskonzentrates.

250 kg 1,3-Dimethyl-3-(2-benzthiazolyl)-harnstoff (Methabenzthiazuron),
220 kg Phospholipid (45 % Phosphatidylcholin)
138 kg Isobutanol
 90 kg Propylglykolmonomethylether

werden in einem 750 Liter Lösemischer 1/2 Stunde dispergiert. Angeschlossen wurde eine Tandemmühle der Fa. Netzsch und die Dispersion wird mit einer Durchsatzleistung von 90 kg/Stunde in zwei Stufen vermahlen. Durch diesen Mahlvorgang wird eine Korngröße 50 % unter 1 µm an Methabenzthiazuron-Kristallen erreicht. Das resultierende Suspensionskonzentrat ist eine gut gießbare Flüssigkeit, die in Wasser spontan oder nach leichtem Schütteln eine stabile Suspension liefert. Die Suspension ist als Spritzbrühe verwendbar.

## Beispiel 4

Herstelung eines Herbizid-Suspensionskonzentrates.

150 g 2-Chlor-4-ethylamino-6-isopropylamino-s-triazin (Atrazin)
 46 g Phospholipid (75 % Phosphatidylcholin)
 95 g Ethanol
 90 g Ethylenglycolmonoethylether

werden, wie in Beispiel 1 beschrieben, mit Hilfe von 50 g Sand (Durchmesser 1 mm, Standard Sand, 20-30 ASTM, Ottawa Silica Corp.) vermahlen.

## Beispiel 5

Herstellung eines Herbizid-Suspensionskonzentrates.

 50 g 3-(3,4-Dichlorphenyl)-1-methoxy-1-methylharnstoff (Linuron)
146 g Phospholipid (50 % Phosphatidylcholin)
114 g Methanol
 90 g Ethylenglykolmonomethylether

werden zusammen in eine Rührwerksmühle (Hersteller : Vollrath, Köln, Typ VSME, Mahltopfgröße 2,2 Liter, Umdrehungszahl 2 820 m$^{-1}$) die 1,2 kg Sand (Durchmesser 1 mm, Standard Sand, 20-30 ASTM, Ottawa Silica Corp.) enthält, gegeben und 20 Minuten bei Raumtemperatur gerührt, wodurch die Linuronkristalle auf eine mittlere Teilchengröße von ≤ 1 μm vermahlen werden.

Die folgenden Konzentrate können analog den Beispielen 1-5 hergestellt werden :

## Beispiel 6

Fungizid-Suspensionskonzentrat

120 g 1,3-Dicyan-2,4,5,6-tetrachlorbenzol (Chlorthalonil)
 95 g Phospholipid (50 % Phosphatidylcholin)
120 g Isopropanol
 80 g Ethylenglykolmonomethylether

## Beispiel 7

Fungizid-Suspensionskonzentrat

140 g N-Trichlormethylthiophthalimid (Folpet)
 65 g Phospholipid (75 % Phosphatidylcholin)
 90 g Ethanol
120 g Diethylglykolmonomethylether

## Beispiel 8

Fungizid-Suspensionskonzentrat

115 g N-(Trichlormethylthio)-tetrahydrophthalimid (Captan)
120 g Phospholipid (25 % Phosphatidylcholin)
230 g Tetrahydrofuran
 60 g Diethylenglykolmonoethylether

## Beispiel 9

Herstellung eines Herbizid-Suspensionskonzentrates.

100 g 3-(4-Isopropyl-phenyl)-1,1-dimethylharnstoff (Isoproturon)
100 g Phospholipid (95 % Phosphatidylcholin)
130 g Ethanol
 90 g Ethylenglykolmonoethylether

werden zusammen in eine Rührwerksmühle (Hersteller : Vollrath, Köln, Typ VSME, Mahltopfgröße 2,2 Liter, Umdrehungszahl 2 820 m$^{-1}$) die 1 kg Bleiglaskugeln (Durchmesser 3 mm) enthält, gegeben und 20 Minuten bei Raumtemperatur gerührt, wodurch die Isoproturonkristalle auf eine mittlere Teilchengröße

von ≤ 1 μm vermehlen werden. Das resultierende Suspensionskonzentrat ist eine gut gießhare Flüssigkeit, die in Wasser spontan oder nach leichtem Schütteln eine stabile Suspension liefert. Die Suspension ist als Spritzbrühe verwendbar.

Beispiel 10

Herbizid-Suspensionskonzentrat

100 g N-Phosphonomethylglycin (Glyphosat),
 70 g Phospholipid (25 % Phosphatidylcholin)
150 g Tetrahydrofuran
100 g Ethylenglykolmonoethylether

Beispiel 11

Herbizid-Suspensionskonzentrat

100 g 3-(3-chlor-4-methyl-phenyl)-1,1-dimethylharnstoff (Chlortoluron)
 96 g Phospholipid (45 % Phosphatidylcholin)
 92 g Methanol
 90 g Ethylenglykolmonoethylether

Beispiel 12

Herbizid-Suspensionskonzentrat

 30 g N-(4-Methoxy-6-methyl-1,3,5-triazin-2-yl)-amino-carbonyl-2-chlorphenyl-sulfonamid
190 g Phospholipid (78 % Phosphatidylcholin)
210 g Ethanol
170 g Ethylenglykomonomethylether

Beispiel 13

Insektizid-Suspensionskonzentrat

 95 % 2,3-Dihydro-2,2-dimethyl-benzofuran-7-yl-N-methyl-carbamat (Carbofuran)
107 g Phospholipid (95 % Phosphatidylcholin)
125 g Isobutanol
 95 % Ethylenglykol

Beispiel 14

Insektizid-Suspensionskonzentrat

 49 g 0,5-Dimethyl-N-acetyl-amido-thiophosphat (Acephat)
112 g Phospholipid (45 % Phosphatidylcholin)
120 g Ethanol
 75 g Ethylenglykolmonoethylether

Beispiel 15

Insektizid-Suspensionskonzentrat

124 g 1-(4-Chlorphenyl)-3-(2,6-Difluorbenzoyl)-harnstoff (Diflubenzuron)
 98 g Phospholipid (75 % Phosphatidylcholin)
210 g Etnanol
 90 g Propylglykoldimethylether

Beispiel 16

Insektizid-Suspensionskonzentrat

100 g N-(2-Chlorbenzoyl)-N'-(4-trifluormethoxy-phenyl)-harnstoff
100 g Phospholipid (48 % Phosphatidylcholin)
130 g Ethanol
 90 g Ethylenglykoldimethylether

**Patentansprüche**

1. Pflanzenschutzmittelsuspensionskonzentrate auf Basis eines in Wasser oder physiologisch unbedenklichen Lösungsmitteln unlöslichen bzw. schwerlöslichen Pestizides, eines Phospholipides und eines organischen Lösungsmittels bzw. Lösungsmittelgemisches, dadurch gekennzeichnet, daß das Konzentrat aus

a) 15-35 % eines in Wasser oder physiologisch unbedenklichen Lösungsmitteln eine Löslichkeit von $\leqslant 2$ % aufweisenden Pestizides mit einem Schmelzpunkt von $> 40$ °C,

b) 15-35 % eines Phospholipides aus der Gruppe Phosphatidylcholin, den hydrierten Phosphatidylcholinen, Phosphatidylethanolamin, den N-Acylphosphatidylethanolaminen, Phosphatidylinosit, Phosphatidylserin und Phosphatidylglycerol oder eines Gemisches aus mehreren solcher Phospholipide und

c) 40-60 % eines Lösungsmittels oder Lösungsmittelgemisches aus der Gruppe der Alkohole bzw. Ether

besteht und die mittlere Partikelgröße $\leqslant 1$ μm beträgt.

2. Pflanzenschutzmittelsuspensionskonzentrate gemäß Anspruch 1, dadurch gekennzeichnet, daß als Pestizid ein Wirkstoff oder Wirkstoffgemisch aus der Gruppe der Herbizide, Insektizide oder Fungizide eingesetzt werden.

3. Pflanzenschutzmittelsuspensionskonzentrate gemäß Anspruch 1 oder 2, dadurch gekennzeichnet, daß als Phospholipid Phosphatidylcholin oder Mischungen aus Phosphatidylcholin und Phosphatidylethanolamin eingesetzt werden.

4. Pflanzenschutzmittelsuspensionskonzentrate gemäß Anspruch 1 bis 3, dadurch gekennzeichnet, daß als Phospholipid ein Phospholipid mit einem Gehalt von 20-98 % Phosphatidylcholin eingesetzt wird.

5. Pflanzenschutzmittelsuspensionskonzentrate gemäß Anspruch 1 bis 4, dadurch gekennzeichnet, daß als Lösungsmittel Gemische aus $C_{1-3}$-Alkoholen und Ethylenglykolalkylether eingesetzt werden.

6. Verfahren zur Herstellung von Pflanzenschutzmittelsuspensionskonzentraten gemäß Anspruch 1 bis 5, dadurch gekennzeichnet, daß man ein Gemisch aus

a) 15-35 % eines in Wasser oder physiologisch unbedenklichen Lösungsmitteln eines Löslichkeit von $\leqslant 2$ % aufweisenden Pestizides mit einem Schmelzpunkt von $> 40$ °C,

b) 15-35 % eines Phospholipides aus der Gruppe Phosphatidylcholin, den hydrierten Phosphatidylcholinen, Phosphatidylethanolamin, den N-Acylphosphatidylethanolaminen, Phosphatidylinosit, Phosphatidylserin und Phosphatidylglycerol oder eines Gemisches aus mehreren solcher Phospholipide und

c) 40-60 % eines Lösungsmittels oder Lösungsmittelgemisches aus der Gruppe der Alkohole bzw. Ether

zusammen in einer Kolloid-, Kugel-, Sand-, Rührwerks- oder Reibkugelmühle 10-60 Min. bei 20-50 °C bis zu einer Partikelgröße von $\leqslant 1$ μm vermahlt.

**Claims**

1. Suspension concentrates of plant protection agents based on a pesticide insoluble or sparingly soluble in water or a physiologically acceptable solvent, a phospholipid and an organic solvent or solvent mixture, characterised in that the concentrate consists of

a) 15-35 % of a pesticide insoluble or sparingly soluble in water or a physiologically acceptable solvent at 2 % or less and having a melting point of $> 40$ °C,

b) 15-35 % of a phospholipid from the group phosphatidylcholine, the hydrogenated phosphatidylcholines, phosphatidylethanolamine, the N-acylphosphatidylethanolamines, phosphatidylinositol, phosphatidylserine, and the mixtures of several of said phospholipides and

c) 40-60 % of a solvent or solvent mixture from the group of the alcohols and the ethers,

the mean particle size being $\leqslant 1$ μm.

2. Suspension concentrates of plant protection agents according to Claim 1, characterised in that an active compound or active compound mixture from the herbicide, insecticide or fungicide group is used as the pesticide.

3. Suspension concentrates of plant protection agents according to Claims 1 to 2, characterised in that phosphatidylcholine or mixtures of phosphatidylcholine and phosphatidylethanolamine are used as the phospholipid.

4. Suspension concentrates of plant protection agents according to Claims 1 to 3, characterised in that a phospholipid containing 20-98 % of phosphatidylcholine is used as the phospholipid.

5. Suspension concentrates of plant protection agents according to Claims 1 to 4, characterised in that mixtures of $C_{1-3}$-alcohols and ethylene glycol alkyl ethers are used as the solvent.

6. Process for the preparation of suspension concentrates of plant protection agents according to Claims 1 to 5, characterised in that a mixture of

a) 15 to 35 % of a pesticide insoluble or sparingly soluble pesticide at 2 % or less and having a melting point of $> 40$ °C,

b) 15-35 % of a phospholipid of the group phosphatidylcholine, the hydrogenated phosphatidylcholines, phosphatidylethanolamine, the N-acylphosphatidylethanolamines, phosphatidylinositol, phosphatidylserine, and the mixtures of several of said phospholipides and

c) 40-60 % of a solvent or solvent mixture from the group of the alcohols and the ethers,
is ground together in a colloid, ball, sand, stirred or grinding ball mill at 20-50 °C for 10-60 minutes until a particle size of ≤ 1 μm.

**Revendications**

1. Suspensions concentrées de produits phytosanitaires à base d'un pesticide insoluble ou peu soluble dans l'eau ou les solvants non toxiques, d'un phospholipide et d'un solvant ou mélange solvant organique, caractérisées en ce que le concentré consiste en :

a) 15 à 35 % d'un pesticide fondant à plus de 40 °C et présentant dans l'eau ou les solvants non toxiques une solubilité inférieure ou égale à 2 %,

b) 15 à 35 % d'un phospholipide du groupe de la phosphatidylcholine, des phosphatidylcholines hydrogénées, de la phosphatidyléthanolamine, des N-acyl-phosphatidyléthanolamines, du phosphatidylinositol, de la phosphatidylsérine et du phosphatidylglycérol ou d'un mélange de plusieurs de ces phospholipides, et

c) 40 à 60 % d'un solvant ou mélange solvant du groupe des alcools et/ou des éthers,
et en ce que la dimension de particule moyenne est inférieure ou égale à 1 micromètre.

2. Suspensions concentrées de produits phytosanitaires selon la rev. 1, caractérisées en ce que le pesticide utilisé consiste en une substance active ou un mélange de substances actives du groupe des herbicides, des insecticides ou des fongicides.

3. Suspensions concentrées de produits phytosanitaires selon la rev. 1 ou 2, caractérisées en ce que le phospholipide utilisé est la phosphatidylcholine ou un mélange de phosphatidylcholine et de phosphatidyléthanolamine.

4. Suspensions concentrées de produits phytosanitaires selon l'une des rev. 1 à 3, caractérisées en ce que le phospholipide utilisé contient de 20 à 98 % de phosphatidylcholine.

5. Suspensions concentrées de produits phytosanitaires selon l'une des rev. 1 à 4, caractérisées en ce que le solvant utilisé consiste en un mélange d'alcools en C 1-C 3 et d'éthers alkyliques de l'éthylène-glycol.

6. Procédé de préparation des suspensions concentrées de produits phytosanitaires selon l'une des rev. 1 à 5, caractérisé en ce que l'on broie ensemble dans un broyeur colloïdal, un broyeur à billes, un broyeur à sable, un broyeur à agitation ou un broyeur à billes et frottement, pendant 10 à 60 mn, à une température de 20 à 50 °C, jusqu'à une dimension de particule inférieure ou égale à 1 micromètre, un mélange de :

a) 15 à 35 % d'un pesticide fondant à plus de 40 °C et présentant dans l'eau ou les solvants non toxiques une solubilité inférieure ou égale à 2 %,

b) 15 à 35 % d'un phospholipide du groupe de la phosphatidylcholine, des phosphatidylcholines hydrogénées, de la phosphatidyléthanolamine, des N-acyl-phosphatidyléthanolamines, du phosphatidylinositol, de la phosphatidylsérine et du phosphatidylglycérol ou d'un mélange de plusieurs de ces phospholipides, et

c) 40 à 60 % d'un solvant ou mélange solvant du groupe des alcools et/ou des éthers.